# EUROPEAN PATENT APPLICATION

(11) **EP 4 807 490 A1**
(43) Date of publication of application: **16.09.2026**
(21) Application number: 26163781.3
(22) Date of filing: 10.03.2026
(51) Int. Cl.: G06F 1/03, G05B 19/02, G06F 1/3206, F02C 9/00

(54) **METHOD TO DECREASE COMPUTATIONAL COST ON AN N-DIMENSIONAL TABLE**

(30) Priority: 10.03.2025 US 202519075350
(71) Applicant: Pratt & Whitney Canada Corp., Longueuil, Québec J4G 1A1 (CA)
(72) Inventor: PARISER, Jonathan, (01BE5) Longueuil, J4G 1A1 (CA)
(74) Representative: Dehns

(57) **Abstract**

A method includes obtaining at a first sampling time, a first set of n sampled values of n control parameters for one or more control systems of an aircraft. The method includes performing, in a higher power mode, a first sequential lookup and interpolation operation of a table maintained in the memory (110) to obtain a first output control value, and sending, the first output control value to the one or more control systems of the aircraft. Determining that at least one condition associated with a first steady state has been satisfied and switching to a first lower power mode of the device (100). In the first lower power mode, performing a second sequential lookup and interpolation operation to obtain a second output control value and sending the second output control value to the one or more control systems of the aircraft.

## Description

### TECHNICAL FIELD

This disclosure is generally directed to data processing in aircraft control systems. More specifically, this disclosure is directed to systems and methods for decreasing a computational cost on an n-dimensional table.

### BACKGROUND

Processors suitable for safety-critical aircraft applications (for example, engine control) operate in a world largely apart from the many of the general trends in computing and chip design. Notably, processors suitable for aerospace applications are, in the main, significantly less powerful (both in terms of speed and available memory) than conventional computers suitable for terrestrial applications. This is due to multiple factors, including, without limitation, strict certification and testing requirements to ensure that processors for aerospace applications do not crash, freeze. or otherwise unexpectedly suspend normal operation. Additionally, airframes have, relative to desktop and server computers, much longer service lives, and the processors executing safety-critical applications such as engine control, can be on the order of 10 or more years old.

Given the above, unlike in many terrestrial applications for which increased processing power is easily available on demand, such as through cloud computing services, the performance of an on-board processor of an aircraft to operate as a tool for generating control inputs and monitoring the aircraft cannot simply be improved by replacing an existing processor or summoning more processing resources.

Thus, extending the capacity of existing computational resources on an aircraft to handle larger and more complicated operations remains a source of technical challenges and opportunities for improvement in the art.

### SUMMARY

This disclosure is directed to systems and methods for decreasing computational cost on an n-dimensional table.

In an aspect of the present invention, a method includes obtaining at a first sampling time, at a device comprising a processor and a memory, a first set of n sampled values of n control parameters for one or more control systems of an aircraft, wherein n is a finite positive integer greater or equal to 2. The method can also include performing, in a higher power mode, a first sequential lookup and interpolation operation of a table maintained in the memory to obtain a first output control value, wherein the table maintained in the memory has at least n dimensions, the n dimensions corresponding to each of the n control parameters, and wherein during the first sequential lookup and interpolation operation, all of the first set of n sampled values are used as current values in the first sequential lookup and interpolation operation. The method can include sending, the first output control value to the one or more control systems of the aircraft, determining that at least one condition associated with a first steady state has been satisfied, and responsive to determining that the at least one condition associated with the first steady state has been satisfied, switching to a first lower power mode of the device. The method can include obtaining, at a second sampling time subsequent to the first sampling time, a second set of sampled values of the control parameters, wherein the second set of sampled values of the control parameters comprises a first reduced subset of values of the n control parameters. The method can include in the first lower power mode, performing a second sequential lookup and interpolation operation of the table maintained in the memory to obtain a second output control value, wherein, during the second sequential lookup and operation, the second set of sampled values of the control parameters are used as current values to perform the second sequential lookup and interpolation operation, sending the second output control value to the one or more control systems of the aircraft.

In another aspect of the present invention, an apparatus includes a memory, an input/output (I/O) unit and a processor. The apparatus may optionally comprise first and second sensors) The processor can be configured to obtain at a first sampling time, via the I/O unit (and/or via the first sensor), a first set of n sampled values of n control parameters for one or more control systems of an aircraft, wherein n is a finite positive integer greater or equal to 2. The processor can be configured to perform, in a higher power mode, a first sequential lookup and interpolation operation of a table maintained in the memory to obtain a first output control value, wherein the table maintained in the memory has at least n dimensions, the n dimensions corresponding to each of the n control parameters, and wherein during the first sequential lookup and interpolation operation, all of the first set of n sampled values are used as current values in the first sequential lookup and interpolation operation. The processor can be configured to send the first output control value to the one or more control systems of the aircraft via the I/O unit, determine that at least one condition associated with a first steady state has been satisfied, and responsive to determining that the at least one condition associated with the first steady state has been satisfied, switch to a first lower power mode. The processor can be configured to obtain, via the I/O unit (and/or via the second sensor), at a second sampling time subsequent to the first sampling time, a second set of sampled values of the control parameters, wherein the second set of sampled values of the control parameters comprises a first reduced subset of values of the n control parameters. The processor can be configured to in the first lower power mode, perform a second sequential lookup and interpolation operation of the table maintained in the memory to obtain a second output control value, wherein, during the second sequential lookup and operation, the second set of sampled values of the control parameters are used as current values to perform the second sequential lookup and interpolation operation and send the second output control value to the one or more control systems of the aircraft via the I/O unit.

In another aspect of the present invention, a non-transitory, machine-readable medium includes instructions, which when executed by a processing device of an apparatus comprising a memory and an input/output (I/O) unit, cause the apparatus to carry out the above method, or to carry out the following steps. Obtain at a first sampling time, via the I/O unit, a first set of n sampled values of n control parameters for one or more control systems of an aircraft, wherein n is a finite positive integer greater or equal to 2. When executed, the instructions can cause the apparatus to perform, in a higher power mode, a first sequential lookup and interpolation operation of a table maintained in the memory to obtain a first output control value, wherein the table maintained in the memory has at least n dimensions, the n dimensions corresponding to each of the n control parameters, and wherein during the first sequential lookup and interpolation operation, all of the first set of n sampled values are used as current values in the first sequential lookup and interpolation operation. When executed, the instructions can cause the apparatus to send the first output control value to the one or more control systems of the aircraft via the I/O unit, determine that at least one condition associated with a first steady state has been satisfied, and responsive to determining that the at least one condition associated with the first steady state has been satisfied, switch to a first lower power mode. When executed, the instructions can cause the apparatus to obtain, via the I/O unit, at a second sampling time subsequent to the first sampling time, a second set of sampled values of the control parameters, wherein the second set of sampled values of the control parameters comprises a first reduced subset of values of the n control parameters. When executed, the instructions can cause the apparatus to in the first lower power mode, perform a second sequential lookup and interpolation operation of the table maintained in the memory to obtain a second output control value, wherein, during the second sequential lookup and operation, the second set of sampled values of the control parameters are used as current values to perform the second sequential lookup and interpolation operation, and send the second output control value to the one or more control systems of the aircraft via the I/O unit.

Any single one or any combination of the following features may be used with the example embodiments above. The device comprising the processor and the memory can be at least one of a Full Authority Digital Engine Controller ("FADEC") or an electronic engine controller ("EEC"). The at least one condition associated with the first steady state can be at least one of: a first predetermined interval during which a measured change in value of one or more control parameters has not exceeded a first threshold value or a second predetermined interval during which no control input from one or more of a yoke, rudder pedal or throttle exceeding one or more second threshold values has been received. Responsive to determining that at least one condition associated with a second steady state has been satisfied, the processor can switch to a second lower power mode of the device, obtaining (e.g., via the I/O unit and/or a third sensor), at a third sampling time, subsequent to the second sampling time, a third set of sampled values of control parameters, wherein the third set of sampled values of the control parameters comprises a second reduced subset of the n control parameters, in the second lower power mode, performing a third sequential lookup and interpolation operation of the table maintained in the memory to obtain a third output control value, wherein, during the second sequential lookup and operation, the third set of sampled values are used as the current values to perform the second sequential lookup and interpolation operation, and sending, (e.g., via the I/O unit), the third output control value to the one or more control systems of the aircraft. The third set of sampled values of the control parameters comprises a subset of the second set of sampled values of the control parameters, or the third set of sampled values contains sampled values of control parameters not included in the second set of sampled values of the control parameters. The second set of sampled values of the control parameters is selected based on at least one of: an estimated variability of one or more control parameters of the n control parameters, or an offset value. Responsive to determining that a condition associated with a dynamic operating state is satisfied, the processor can switch the device from the first lower power mode to the higher power mode.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example device for implementing methods for reducing the computational cost of a three-dimensional (or n-dimensional) table according to various embodiments of this disclosure;
FIGURE 2 illustrates aspects of a table lookup operation performed by a processor according to various embodiments of this disclosure, and how certain embodiments, compute costs can be reduced without loss of accuracy can be realized by dynamically and selectively tuning data sampling rates;
FIGURES 3A and 3B illustrate aspects of separately tuning sampling rates of sampled parameters according to embodiments of this disclosure; and
FIGURE 4 illustrates operations of an example method for a control device to perform controlled entry from a default higher power mode of obtaining control output values to a reduced power mode according to this disclosure.

### DETAILED DESCRIPTION

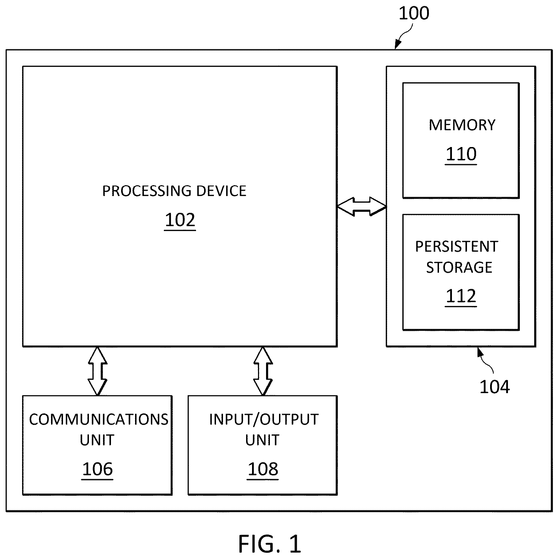

FIGURES 1 through 4, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As described above, expanding the performance envelope of the computing systems responsible for safety-critical systems on aircraft presents technical and practical challenges not found in terrestrial computing. Because the processors for safety-critical applications need to be approved according to a lengthy and rigorous certification process, and airframes have long service lives, upgrading to faster silicon, or easily obtaining additional processing resources (as is done in cloud computing) are not viable options for safety-critical aerospace applications. Instead, for aerospace applications, performance gains are generally realized by working within the constraints imposed by the processor speed and existing memory capacity of an existing processor.

Embodiments according to the present disclosure provide methods, apparatus, and computer-readable program products for reducing the computational load associated with implementing and finding data within multidimensional tables accessed by processors of safety-critical aircraft control systems.

FIGURE 1 illustrates an example device 100 for implementing methods for reducing the computational cost of a three-dimensional (or n-dimensional) table according to various embodiments of this disclosure. Device 100 can be, for example, part of a fully autonomous digital engine control ("FADEC") or an electronic engine control ("EEC").

As shown in FIGURE 1, the device 100 denotes a computing device or system that includes at least one processing device 102, at least one storage device 104, at least one communications unit 406, and at least one input/output (I/O) unit 108. The processing device 102 may execute instructions that can be loaded into a memory 110. The processing device 102 includes any suitable number(s) and type(s) of processors or other devices in any suitable arrangement. Example types of processing devices 102 include one or more microprocessors, microcontrollers, digital signal processors (DSPs), application-specific integrated circuits (ASICs), field programmable gate arrays (FPGAs), graphics processing units (GPUs), NPUs, or discrete circuitry.

The memory 110 and a persistent storage 112 are examples of storage devices 104, which represent any structure(s) capable of storing and facilitating retrieval of information (such as data, program code, and/or other suitable information on a temporary or permanent basis). The memory 110 may represent a random-access memory or any other suitable volatile or non-volatile storage device(s). The persistent storage 112 may contain one or more components or devices supporting longer-term storage of data, such as a read only memory, hard drive, Flash memory, or optical disc.

The communications unit 106 supports communications with other systems or devices. For example, the communications unit 106 can include a network interface card or a wireless transceiver facilitating communications over a wired or wireless network. The communications unit 106 may support communications through any suitable physical or wireless communication link(s).

The I/O unit 108 allows for input and output of data. For example, the I/O unit 108 may provide a connection for user input through a keyboard, mouse, keypad, touchscreen, or other suitable input device. The I/O unit 108 may also send output to a display or other suitable output device. Note, however, that the I/O unit 108 may be omitted if the device 100 does not require local I/O, such as when the device 100 can be accessed remotely or operated autonomously.

Although FIGURE 1 illustrates one example of a device 100 for interrogating a table for control inputs according to this disclosure, various changes may be made to FIGURE 1. For example, computing devices and systems come in a wide variety of configurations, and FIGURE 1 does not limit this disclosure to any particular computing device or system.

In many aerospace applications, including, without limitation, engine control, control inputs are generated and issued by sampling one or more relevant parameters (for example, altitude, throttle position, air speed, pressure ratio, temperature at a certain stage within a turbine engine, estimated thrust, etc.), and providing current values of the sampled values to the processor. The processor then searches for and obtains one or more control input values for a safety-critical system (for example, one or more engines) from a multi-dimensional table maintained in a cache memory accessible to the processor based on the current values of the sampled parameters. In some embodiments, obtaining the one or more control input values comprises one or more lookup operation for a table value best satisfying a proximity threshold for the sampled values. In some embodiments, obtaining the one or more control input values comprises one or more lookup operations for table values best satisfying proximity thresholds, in conjunction with one or more interpolations to find a control input value between table values satisfying the proximity thresholds.

Typically, the dimensionality of the table maintained in the cache memory corresponds to, or is equal to, or greater than the number of sampled parameters. For example, in a case where the sampled parameters comprise altitude and airspeed, the corresponding table maintained in cache memory would have two or more dimensions. As skilled artisans will appreciate, the size of the cached table grows geometrically with the number of sampled parameters, and in many implementations, the table uses all, or almost all, of the cache memory available to the processor (for example, device 100), thus depriving other processes of cache memory resources.

Embodiments according to this disclosure reduce the computational load associated with obtaining values from multi-dimensional tables based on sampled input data by selectively and dynamically tuning the sampling rate of one or more sampled parameters.

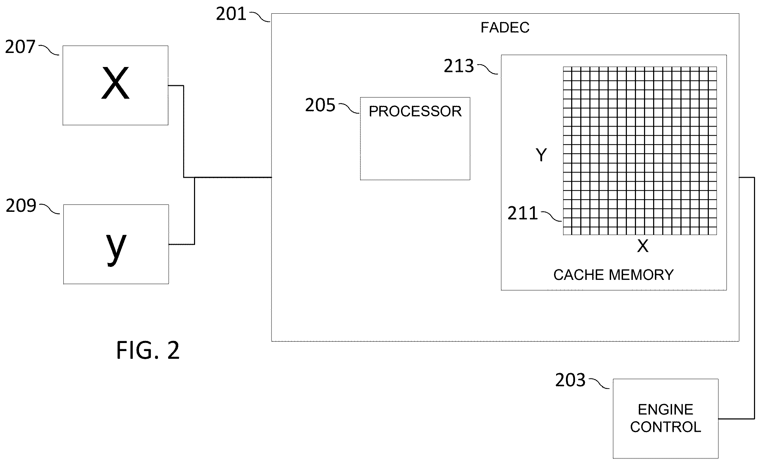

FIGURE 2 illustrates, in block diagram format, aspects of a table lookup operation performed by a processor according to various embodiments of this disclosure, and how certain embodiments, compute costs can be reduced without loss of accuracy can be realized by dynamically and selectively tuning data sampling rates.

Referring to the illustrative example of FIG. 2, a device 201 (for example, a FADEC, EEC, or device 100) is shown in the figure. Device 201 is connected to one or more safety-critical apparatus of an aircraft. In this illustrative example, device 201 can be a FADEC connected to one or more engine control systems 203. Examples of engine control systems 203 include, without limitation, adjustable vanes of compressor stages of a turbine engine, a fuel system for a turbine engine, a control system for an afterburner, or variable inlet guide vanes (VIGV) of a turbofan. As shown in the figure, device 201 comprises a processor 205, wherein processor 205 is configured to receive at regular intervals, data from one or more sensors which affect the operation of one or more engine control systems. In the simplified example of FIG. 2A, processor 205 receives, at a first sampling rate, sampled data from a first sensor 207, which in this example, is an altitude sensor for the aircraft. In other embodiments, first sensor could be, for example, a throttle position sensor, or an outside air temperature sensor. In this example, processor 205 is also configured to receive, at a regular intervals according to a second sampling rate, sampled data from a second sensor 209. In this example, the second sensor is a temperature sensor from the third stage of a turbine engine's compressor (sometimes referred to as a "T3 sensor"). As skilled artisans can appreciate, both altitude and internal compressor temperatures are relevant parameters to a plurality of engine control systems, such vane adjustment systems and fuel feed systems. Further, the control inputs to many such engine control systems can be modulated rapidly, sometimes at rates equal to the sample rates of either first sensor 207 or second sensor 209.

In the illustrative example of FIG. 2, first sensor 207 and second sensor 209 provide samples to processor 205 at the same rate. Further, in this example, for each sample pair from first and second sensors 207 and 209, processor 205 looks up, within n-dimensional table 211 (in this example, the n equals 2, because there are only two inputs) stored in memory cache 213, one or more control values corresponding to an intersection of one or more current values of a first sampled parameter (in this example, altitude, which is specified as the x-axis of n-dimensional table 211, and one or more current values of a second sampled parameter (in this example, T3, which is specified as the y-axis of n-dimensional table 211.

As suggested by the grid shape of n-dimensional table 211 in FIG. 2, n-dimensional table 211 comprises an array of control outputs associated with discrete values of the first and second sampled parameters, wherein the discrete values of the first and second parameters may be spaced according to predetermined intervals. However, in many instances, the sampled values of the first and second parameters may be measured as functionally continuous values (i.e., to multiple decimal points) or at different intervals than those of n-dimensional table. For example, to conserve limited cache memory resources, or to increase the dimensionality of the table, the resolution of the discrete values along the constituent axes of the chart may be decreased. As noted elsewhere in this disclosure, in many cases, the n-dimensional table occupies most of the available cache memory of device 201.

In some embodiments, the sampled values of the first and second parameters are rounded according to one or more proximity criteria (for example, rounding to the altitude value along an x-axis of n-dimensional table 211 closest to the sampled value, or rounding up or rounding down to a nearest value along the parameter axis of the table). In some embodiments, the sampled values of the first and second parameters each fall between two discrete values along their parameter axes within n-dimensional table 211. In such cases, processor 205 can obtain the control values by interpolation, and calculating a value in the two-dimensional space between the values on the x-axis which the sampled altitude value falls between and the values on the y-axis which the sampled T3 value falls between. Skilled artisans will appreciate that, in an n-dimensional table with three or more axes, the interpolations can be done sequentially, and that the first parameter axis in the sequence can more interpolations than subsequent parameter axes. For example, where n-dimensional table is a three-dimensional table, interpolation of a control output value requires interpolating a cube within the coordinate space between values on the first parameter axis, then finding a plane within the cube between values on the second parameter axis, and finally obtaining the control output value by interpolating along a line between values on the third coordinate axis to obtain control output value.

As shown above, the computational costs of interpolating control output values based on sampled input values as described above: a.) can be high, as the dimensionality of n-dimensional table 211 increases; and b.) the computational costs can be front-loaded according to which parameter axis selected for the initial rounds of interpolation. To reiterate, in the three-dimensional example discussed above, the first round of interpolation entailed four separate interpolations using the boundary values on the first coordinate axis, while the second round of interpolation comprised two separate boundary values and on the second coordinate axis, and the third round of interpolation comprised a single interpolation between boundary values on the third coordinate axis.

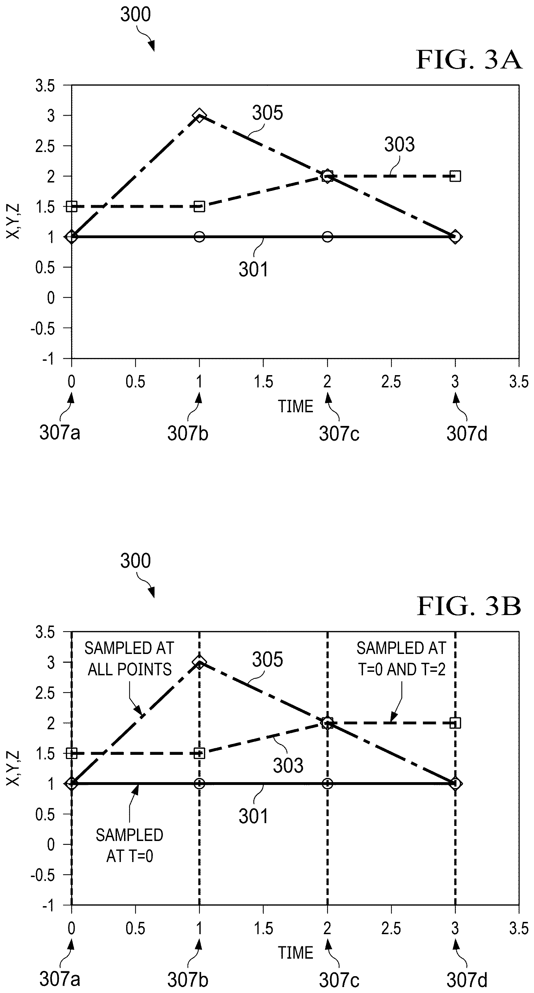

FIGURES 3A and 3B illustrate aspects of separately tuning sampling rates of sampled parameters according to embodiments of this disclosure. For consistency and convenience of cross-reference, elements to more than one of FIGS. 3A and 3B are numbered similarly.

Referring to the illustrative example of FIG. 3A, three plots 301, 303 and 305 of normalized values of operating parameters for a safety-critical control system (for example, an engine control system) are shown in graph 300. In this illustrative example, first plot 301 represents sampled values of an outside temperature of the air entering a turbine engine, wherein the outside air temperature is one parameter axis of a table (for example, n-dimension table 211 in FIG. 2) for obtaining control outputs for the turbine engine. Second plot 303 represents sampled values of a pressure ratio (for example, a pressure ratio across compressor stages) within the engine. Third plot 305 represents sampled values of a third parameter, such as engine thrust. As shown in FIG. 3A, plots 301-305 differ significantly in their variable over the four-sample periods shown in the plot. Vertical lines 307a-d represent sampling points, wherein the sensors measuring values of temperature, pressure ratio and thrust report to the FADEC or other electronic device (for example, device 100 in FIG. 1) provide current values of sampled values, from which the processor can obtain current control output values by traversing and interpolating across an n-dimension table in cache memory, as described with reference to FIG. 2.

First plot 301 representing outside temperature does not change over the measured time period, and holds steady at a normalized value of "1." Second plot 303 representing the pressure ratio changes between second sampling point 307b and third sampling point 307c, but otherwise holds steady. Third plot 305 is the most variable, with changes in value at each sampling point. Applying the method of lookup and interpolation described with reference to FIG. 2, and scoring each such interpolation as one compute operation, then interpolating a control value based on all three sampled parameter values requires seven (7) computes - four computes in a first round of computation to interpolate between values along a first parameter axis, two computes in a second round of computation to interpolate between values along a second parameter axis, and one compute in a final round of interpolation along the third and last parameter axis. Table 1 below illustrates the modeled computational load associated with obtaining control output values based on the most current values of the three sampled parameters.

**Table 1**

| | Sampling Point | | | |
|---|---|---|---|---|
| | **0** | **1** | **2** | **3** |
| Ambient Temp. | 4 | 4 | 4 | 4 |
| Pressure Ratio | 2 | 2 | 2 | 2 |
| Thrust | 1 | 1 | 1 | 1 |
| Total Computes | 7 | 7 | 7 | 7 |

As shown above, by computing control output values at each sampling point, seven (7) computes are performed at every sampling interval, consuming cache memory. Embodiments according to the present disclosure leverage the fact that, during steady state operation, one or more parameters do not, or cannot be reasonably expected to vary in value at every sampling point. For example, in the example of FIG. 3A, first plot 301 holds steady across the full measurement interval shown in the figure, and second plot 303 only varies at two of the four sampling points shown in the figure.

As shown by the illustrative example of FIG. 3B, certain embodiments according to the present disclosure can reduce the computational costs associated with traversing a table and interpolating to calculate control output values by judiciously sequencing the order of interpolation among the sampled parameters, and by conditionally reducing one or more sampling rates during steady state operation.

As shown in FIG. 3B, the least dynamic parameter, ambient temperature, is only sampled at one point on plot 301, at time t=0. The second most dynamic parameter, pressure ratio, is sampled at two points on plot 303, t=0 and t=2. However, the most dynamic parameter, thrust is sampled at every sampling point on plot 305.

To reduce sampling bias, and even out computational load over time, in some embodiments, in addition to setting a reduced sampling rate (for example, every other sampling point, or every fourth sampling point), certain embodiments according to the present disclosure may also offset sampling times among parameters when a reduced sampling rate is selected. Table 2 below illustrates both the cadence and computational savings associated with setting sampling rates according to the expected dynamism of the parameters.

**Table 2**

| | Sampling Point | | | |
|---|---|---|---|---|
| | **0** | **1** | **2** | **3** |
| Ambient Temp. (Rate: 1 in 4 points, offset = | 4 | * | * | * |
| 1) | | | | |
| Pressure Ratio (Rate: 1 in 2 points, offset = 1) | * | 2 | * | 2 |
| Thrust (Rate: All points, offset = n/a) | 1 | 1 | 1 | 1 |
| Total Computes | 5 | 3 | 1 | 3 |

As shown above, by sequencing the interpolations according to expected change rate of the parameters, and by implementing offsets to avoid "spikes" in the number of total computes, the computational costs of obtaining control outputs by traversing a 3-dimensional table and interpolating values are more than halved, and the number of total computes at any point never exceed the computational costs at any point in the example shown in Table 1.

As shown by Table 3 below, the computational savings associated with assigning the least dynamic parameter to an earlier round of lookup and interpolation are scalable. Table 3 extends the example of Table 2 by adding a fourth parameter, torque, which in this example, is expected to be as variable as thrust. By extending the dimensionality of the n-dimensional table in cache by one more degree, (e.g., moving from a 3-dimensional to a 4-dimensional table) the maximum number of computes (also referred to as a "worst case") per sampling interval becomes 15 computes (8+4+2+1=15).

**Table 3**

| | Sampling Point | | | |
|---|---|---|---|---|
| | **0** | **1** | **2** | **3** |
| Ambient Temp. (Rate: 1 in 4 points, offset = 1) | 4 | * | * | * |
| Pressure Ratio (Rate: 1 in 2 points, offset = 1) | * | 2 | * | 2 |
| Torque (Rate: All points, offset = n/a) | 2 | 2 | 2 | 2 |
| Thrust (Rate: All points, offset = n/a) | 1 | 1 | 1 | 1 |
| Total Computes | 7 | 5 | 3 | 5 |

As shown above, at the most computationally expensive point in the sampling interval shown above, t=0, the processor performs 7 of a possible 15 computes, thereby using approximately less than half of the available resources. By contrast, in the three-dimensional example described with reference to Table 2, the most computationally expensive point (t=0) in the sampling interval, the processor performed 5 of a possible 7 computes, thereby using approximately 70% of the available resources. This simple example illustrates how the performance gains of selectively reducing the sampling rate according to the expected volatility of the sampled parameters can scale with the dimensionality of the n-dimensional table in the cache memory of the device.

As skilled artisans appreciate, computational efficiency gains can be desirable, but cannot come at the expense of being able to generate control inputs based on the highest resolution data during dynamic phases of an aircraft's operation (for example, take-off, landing, etc.) Accordingly, in certain embodiments according to this disclosure, the electronic device performing lookup and interpolation operations to obtain control output values (for example, device 100 in FIG. 1) has a higher power or "full power," as its default mode of operation, and only switches to a "reduced sampling" mode upon satisfaction of one or more predetermined conditions. In some embodiments, the predetermined conditions may be iterative, with satisfaction of a first condition triggering a first step towards reducing a compute load (for example, reducing the sampling rate of an expected least variable parameter), and subsequent satisfaction triggering a second step towards a further reduction of the compute load (for example, reducing the sampling rate and setting an offset value for the second least variable parameter). Further, according to some embodiments, the device can be configured to immediately revert to "full power" mode upon satisfaction of one or more predefined conditions associated with the aircraft entering or approaching a dynamic operating state. Predefined conditions associated with the aircraft entering or approaching a dynamic operating state can include, without limitation, a change in throttle setting, a control input at the yoke or rudder pedals exceeding a threshold magnitude, a change in altitude evincing turbulence or otherwise exceeding a threshold magnitude, and a drop in ambient air temperature to a value associated with an elevated risk of ice accumulation.

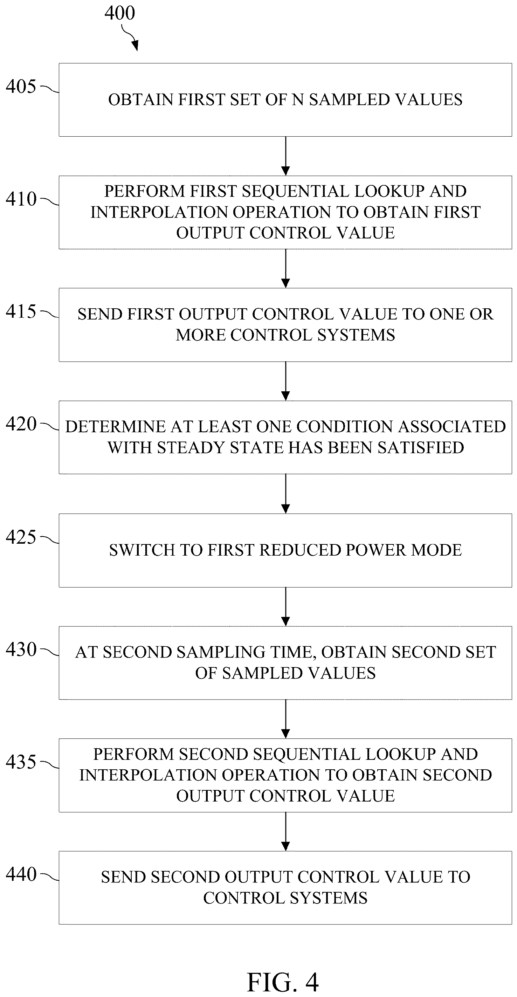

FIGURE 4 illustrates operations of an example method 400 for a control device (such as a FADEC or device 100 in FIG. 1) to perform controlled entry from a default full power mode of obtaining control output values to a reduced or lower power mode.

Referring to the illustrative example of FIG. 4, at operation 405, a device comprising a processor (for example, processor 205 in FIG. 2) and a memory (for example, memory cache 213) receives, at a first time, a first set of n sampled values of n control parameters (for example, altitude or T3 temperature, thrust, torque, ambient temperature, etc.) associated with one or more control systems of an aircraft (such as variable compressor vanes, a fuel system, an afterburner system, or variable fan vanes). In this example, the device is operating in a full power mode, and sample data of the control parameters is being obtained at a full sampling rate (for example, as described with reference to Table 1).

At operation 410, the device performs, based on the full complement of sensor data obtained by operating in a full power mode, wherein the sampling rate is not reduced along any parameter axis to conserve computational resources, a first lookup and interpolation operation to obtain, from a table in memory having at least n dimensions, a first output control value. Referring to the examples of this disclosure, the device performs the operations described with reference to FIG. 2 and Table 1. In full power mode, the device is prioritizing data resolution over computational efficiency, and the compute cost of the lookup and interpolation operation performed at operation 410 can be proportional to ${\sum }_{1}^{n} {2}^{n - 1}$, where n is the number of parameters over which the first lookup and interpolation operation is performed. As discussed with reference to Table 1, if the lookup and interpolation operation is performed over a 3 dimensional table, then the lookup and interpolation operation comprises 7 computes. Similarly, and as described with reference to Table 3, a full lookup and interpolation across a four dimensional would, by the same calculation approach, comprise 15 computes.

At operation 415, the first output control value is sent to the one or more systems of the aircraft. For example, where the control parameters obtained at operation 405 are engine control parameters, the first output control value can be a control instruction to a turbine engine, such as an instruction to adjust a fuel/air mixture to suit current conditions.

At operation 420, the device determines that at least one condition associated with a first steady state has been satisfied. The at least one condition can be, for example, the passage of a predetermined interval during which no control inputs (for example, movements of the yoke, rudder pedals or throttle) greater than threshold magnitudes have been received. The at least one condition can be, for example, the passage of a predetermined interval during which one or more of the sampled parameters has not varied beyond a threshold value (for example, a parameter such as ambient temperature, which held steady during the sample interval shown in FIGS. 3A-3B.

At operation 425. in response to determining that the at least one condition associated with the first steady state has been satisfied, the device switches to a first reduced power mode. According to certain embodiments, the determination of a steady state, and where applicable, what kind of steady state has been achieved is a predicate to determining how to reduce a sampling rate or otherwise reduce the dimensionality and computational expense associated with obtaining control output values in the first reduced power mode. Skilled artisans will appreciate that, given the complexity of certain aircraft systems, and the wide range of operating conditions are such that the choice of control parameter which can be sampled less frequently during lookup and interpolation operations cannot be assumed. Ambient temperature provides one example of a control parameter which can be coarsely sampled without issue under some conditions (for example, when the outside temperature is significantly above the freezing point of water), but may need to be closely sampled under other conditions, such as when the temperature is low and the risk of ice accumulation is greater. Given the wide range of potential operating scenarios and steady states, there may be more significantly more than one reduced power modes for the device, depending on which control parameters require high resolution data.

At operation 430, at a second sampling time subsequent to the first sampling time, a second set of sampled values of the control parameters is obtained. Because the device (for example, the FADEC) is now operating in the first reduced power mode, the second set of sampled values of the control parameters is obtained. According to certain embodiments, the second set of sampled values of the control parameters comprises a first reduced subset of values of the n control parameters. In other words, having switched to the first reduced power mode, the processor does not receive sampling data for each control parameter at each sampling time. Instead, and as shown with reference to FIG. 3B, and Tables 2 and 3, lookup and interpolation to determine control values is done by traversing one or subset of the n-dimensional table associated with previously received control parameters using the current control parameter values in the second set of sampled values. For example, referring to the explanatory example of Table 2, at time t=2, the second subset of sampling values would comprise just the most recent value of thrust.

Depending on embodiments and the distribution of computational resources between the device performing method 400 and the sampling systems providing the sampled values of the control parameters, there are multiple possible ways of providing the second set of sampling values. In some embodiments, where the clock speed at the sensors or other apparatus obtaining measurements of the control parameters cannot be slowed or offset, the device can obtain selectively ignore and take measurement values presented by the sensors. Additionally, or alternatively, the clocking mechanisms of the sensors and systems which provide the values of the control parameters can be slowed or offset to change the pace at which sampled values are provided to the device.

At operation 430, a second sequential lookup and interpolation of the n-dimensional table is performed to obtain a second output control value. However, in contrast to the first sequential lookup and interpolation operation performed at operation 410, wherein the computational expense is increased due to traversing all of the dimensions of the n-dimensional table, at operation 430, only a subset of the dimensions of the table are traversed based on the current values of the control parameters. Returning to the example of Table 2, at time t=2, only the subset of n-dimensional table associated with the previously received values of ambient temperature and pressure ratio is traversed using the current value of thrust. Thus, instead of the seven compute operations associated with lookup and interpolation across the three dimensions of ambient temperature, pressure ratio and thrust, only one compute operation is needed to find the second output control value associated with the most recently sampled thrust value.

At operation 440, the obtained second control output value is sent to the one or more control systems of the aircraft.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method, comprising:
obtaining at a first sampling time, at a device (100) comprising a processor (205) and a memory (110), a first set of n sampled values of n control parameters for one or more control systems of an aircraft, wherein n is a finite positive integer greater or equal to 2;
performing, in a higher power mode, a first sequential lookup and interpolation operation of a table maintained in the memory (110) to obtain a first output control value, wherein the table maintained in the memory (110) has at least n dimensions, the n dimensions corresponding to each of the n control parameters, and wherein during the first sequential lookup and interpolation operation, all of the first set of n sampled values are used as current values in the first sequential lookup and interpolation operation;
sending, the first output control value to the one or more control systems of the aircraft;
determining that at least one condition associated with a first steady state has been satisfied;
responsive to determining that the at least one condition associated with the first steady state has been satisfied, switching to a first lower power mode of the device (100);
obtaining, at a second sampling time subsequent to the first sampling time, a second set of sampled values of the control parameters, wherein the second set of sampled values of the control parameters comprises a first reduced subset of values of the n control parameters;
in the first lower power mode, performing a second sequential lookup and interpolation operation of the table maintained in the memory (110) to obtain a second output control value, wherein, during the second sequential lookup and operation, the second set of sampled values of the control parameters are used as current values to perform the second sequential lookup and interpolation operation; and
sending the second output control value to the one or more control systems of the aircraft.

2. The method of Claim 1, wherein the device (100) comprising the processor (205) and the memory (110) comprises at least one of a Full Authority Digital Engine Controller ("FADEC") (201) or an electronic engine controller ("EEC").

3. The method of Claim 1 or 2, wherein the at least one condition associated with the first steady state comprises at least one of: a first predetermined interval during which a measured change in value of one or more control parameters has not exceeded a first threshold value or a second predetermined interval during which no control input from one or more of a yoke, rudder pedal or throttle exceeding one or more second threshold values has been received.

4. The method of Claim 1, 2 or 3, further comprising:
determining that at least one condition associated with a second steady state has been satisfied;
responsive to determining that the at least one condition associated with the second steady state has been satisfied, switching to a second lower power mode of the device (100);
obtaining, at a third sampling time, subsequent to the second sampling time, a third set of sampled values of control parameters, wherein the third set of sampled values of the control parameters comprises a second reduced subset of the n control parameters;
in the second lower power mode, performing a third sequential lookup and interpolation operation of the table maintained in the memory (110) to obtain a third output control value, wherein, during the second sequential lookup and operation, the third set of sampled values are used as the current values to perform the second sequential lookup and interpolation operation; and
sending the third output control value to the one or more control systems of the aircraft.

5. The method of Claim 4, wherein:
the third set of sampled values of the control parameters comprises a subset of the second set of sampled values of the control parameters; or
the third set of sampled values contains sampled values of control parameters not included in the second set of sampled values of the control parameters.

6. The method of any preceding claim, wherein the second set of sampled values of the control parameters is selected based on at least one of: an estimated variability of one or more control parameters of the n control parameters, or an offset value.

7. The method of any preceding claim, further comprising:
responsive to determining that a condition associated with a dynamic operating state is satisfied, switching the device (100) from the first lower power mode to the higher power mode.

8. An apparatus, comprising:
a memory (110);
an input/output (I/O) unit (108); and
a processor (205) configured to:
obtain at a first sampling time, via the I/O unit (108), a first set of n sampled values of n control parameters for one or more control systems of an aircraft, wherein n is a finite positive integer greater or equal to 2;
perform, in a higher power mode, a first sequential lookup and interpolation operation of a table maintained in the memory (110) to obtain a first output control value, wherein the table maintained in the memory (110) has at least n dimensions, the n dimensions corresponding to each of the n control parameters, and wherein during the first sequential lookup and interpolation operation, all of the first set of n sampled values are used as current values in the first sequential lookup and interpolation operation;
send the first output control value to the one or more control systems of the aircraft via the I/O unit (108);
determine that at least one condition associated with a first steady state has been satisfied;
responsive to determining that the at least one condition associated with the first steady state has been satisfied, switch to a first lower power mode;
obtain, via the I/O unit (108), at a second sampling time subsequent to the first sampling time, a second set of sampled values of the control parameters, wherein the second set of sampled values of the control parameters comprises a first reduced subset of values of the n control parameters;
in the first lower power mode, perform a second sequential lookup and interpolation operation of the table maintained in the memory (110) to obtain a second output control value, wherein, during the second sequential lookup and operation, the second set of sampled values of the control parameters are used as current values to perform the second sequential lookup and interpolation operation; and
send the second output control value to the one or more control systems of the aircraft via the I/O unit (108).

9. The apparatus of Claim 8, wherein the apparatus comprises at least one of a Full Authority Digital Engine Controller ("FADEC") (201) or an electronic engine controller ("EEC").

10. The apparatus of Claim 8 or 9, wherein the at least one condition associated with the first steady state comprises at least one of: a first predetermined interval during which a measured change in value of one or more control parameters has not exceeded a first threshold value or a second predetermined interval during which no control input from one or more of a yoke, rudder pedal or throttle exceeding one or more second threshold values has been received.

11. The apparatus of Claim 8, 9 or 10, wherein the processor (205) is further configured to:
determine that at least one condition associated with a second steady state has been satisfied;
responsive to determining that the at least one condition associated with the second steady state has been satisfied, switch to a second lower power mode;
obtain via the I/O unit (108), at a third sampling time, subsequent to the second sampling time, a third set of sampled values of control parameters, wherein the third set of sampled values of the control parameters comprises a second reduced subset of the n control parameters;
in the second lower power mode, perform a third sequential lookup and interpolation operation of the table maintained in the memory (110) to obtain a third output control value, wherein, during the second sequential lookup and operation, the third set of sampled values are used as the current values to perform the second sequential lookup and interpolation operation; and
send, via the I/O unit (108), the third output control value to the one or more control systems of the aircraft.

12. The apparatus of Claim 11, wherein:
the third set of sampled values of the control parameters comprises a subset of the second set of sampled values of the control parameters; or
the third set of sampled values contains sampled values of control parameters not included in the second set of sampled values of the control parameters.

13. The apparatus of any of Claims 8 to 12, wherein the second set of sampled values of the control parameters is selected based on at least one of: an estimated variability of one or more control parameters of the n control parameters, or an offset value.

14. The apparatus of any of Claims 8 to 13, wherein the processor (205) is further configured to:
responsive to determining that a condition associated with a dynamic operating state is satisfied, switch from the first lower power mode to the higher power mode.

15. A non-transitory, machine-readable medium containing instructions, which when executed by a processing device (102) of an apparatus comprising a memory (110) and an input/output (I/O) unit (108), cause the apparatus to:
obtain at a first sampling time, via the I/O unit (108), a first set of n sampled values of n control parameters for one or more control systems of an aircraft, wherein n is a finite positive integer greater or equal to 2;
perform, in a higher power mode, a first sequential lookup and interpolation operation of a table maintained in the memory (110) to obtain a first output control value, wherein the table maintained in the memory (110) has at least n dimensions, the n dimensions corresponding to each of the n control parameters, and wherein during the first sequential lookup and interpolation operation, all of the first set of n sampled values are used as current values in the first sequential lookup and interpolation operation;
send the first output control value to the one or more control systems of the aircraft via the I/O unit (108);
determine that at least one condition associated with a first steady state has been satisfied;
responsive to determining that the at least one condition associated with the first steady state has been satisfied, switch to a first lower power mode;
obtain, via the I/O unit (108), at a second sampling time subsequent to the first sampling time, a second set of sampled values of the control parameters, wherein the second set of sampled values of the control parameters comprises a first reduced subset of values of the n control parameters;
in the first lower power mode, perform a second sequential lookup and interpolation operation of the table maintained in the memory (110) to obtain a second output control value, wherein, during the second sequential lookup and operation, the second set of sampled values of the control parameters are used as current values to perform the second sequential lookup and interpolation operation; and
send the second output control value to the one or more control systems of the aircraft via the I/O unit (108).
